# FASCICULE DE BREVET EUROPEEN

(11) **EP 1 660 213 B1**
(45) Date de publication et mention de la délivrance du brevet: **14.02.2007**
(21) Numéro de dépôt: 04767682.0
(22) Date de dépôt: 15.07.2004
(51) Int. Cl.: B01D 46/24, F01N 3/022

(54) **BLOC FILTRANT POUR LA FILTRATION DE PARTICULES CONTENUES DANS LES GAZ D ECHAPPEMENT D UN MOTEUR A COMBUSTION INTERNE.**
FILTEREINHEIT ZUM FILTERN VON IN ABGAS EINES VERBRENNUNGSMOTORS ENTHALTENEN TEILCHEN
FILTER UNIT FOR FILTERING PARTICLES CONTAINED IN EXHAUST GAS OF AN INTERNAL COMBUSTING ENGINE

(30) Priorité: 18.07.2003 FR 0308776
(43) Date de publication de la demande: 31.05.2006
(73) Titulaire: Saint-Gobain Centre de Recherches et d'Etudes Européen, 92400 Courbevoie (FR)
(72) Inventeur: BARDON, Sébastien, 69006 Lyon (FR)
(74) Mandataire: Sartorius, Jérome
(86) Numéro de dépôt international: PCT/FR2004/001855
(87) Numéro de publication internationale: WO 2005/016491

(56) Documents cités:
- DE-A- 10 037 403
- FR-A- 2 473 113
- FR-A- 2 789 327
- US-A1- 2003 041 730

## Description

L'invention se rapporte à un bloc filtrant pour la filtration des particules contenues dans les gaz d'échappement des moteurs à combustion interne, en particulier du type diesel, et à un corps filtrant comportant au moins un bloc filtrant selon l'invention.

Des structures poreuses en nid d'abeille sont utilisées comme corps filtrants pour la filtration des particules émises par les véhicules diesel. Généralement, ces corps filtrants sont en céramique (cordiérite, carbure de silicium, ...). Ils peuvent être monolithiques ou bien constitués de différents blocs. Dans ce dernier cas, les blocs sont assemblés entre eux par collage au moyen d'un ciment céramique. Le tout est ensuite usiné pour prendre la section souhaitée, circulaire ou elliptique en générale. Le corps filtrant comporte une pluralité de canaux. Il est inséré dans une enceinte métallique. Chaque canal est obturé à l'une ou l'autre de ses extrémités. Il existe ainsi des canaux d'entrée et des canaux de sortie. Les gaz d'échappement sont ainsi contraints à traverser les parois latérales des canaux d'entrée pour rejoindre les canaux de sortie ; c'est ainsi que les particules ou suies se déposent dans le corps filtrant.

Après un certain temps d'utilisation, des suies s'accumulent dans les canaux du corps filtrant ce qui augmente la perte de charge due au filtre et altère les performances du moteur. Pour cette raison, le corps filtrant doit être régénéré régulièrement, classiquement après environ 7 à 10 heures de fonctionnement, quand la perte de charge a atteint une valeur d'environ 150 dPa (pour un moteur d'environ 2 litres de cylindrée fonctionnant sur autoroute avec un corps filtrant d'environ 4 litres).

La régénération consiste à oxyder les suies. Pour ce faire, il est nécessaire de chauffer celles-ci puisque la température des gaz d'échappement est de l'ordre de 300°C alors que la température d'auto inflammation des suies est plutôt de l'ordre de 600°C, dans des conditions de fonctionnement classiques. Malgré cette régénération, des résidus de combustion restent dans le corps filtrant. Ainsi, la perte de charge induite par le corps filtrant après régénération est toujours plus importante que celle induite par le corps filtrant avant régénération. Ce phénomène d'encrassement se poursuit à chaque régénération et il est nécessaire de nettoyer complètement le bloc filtrant chez le garagiste, par exemple tous les 80 000 km. Ce nettoyage constitue un inconvénient à l'utilisation des corps filtrants.

FR 2 473 113 propose un corps filtrant qu'il est possible d'obtenir par extrusion et présentant des canaux d'entrée de section transversale supérieure à celle des canaux de sortie. Les auteurs indiquent une surface de filtration de 7,89 cm²/cm³ de bloc filtrant (soit 0,789 m²/l) avec une section transversale des canaux d'entrée constante et inférieure à 12,9 mm² et une épaisseur de paroi inférieure ou égale à 0,7 mm.

Le corps filtrant décrit dans FR 2 473 113 induit cependant une perte de charge importante, ce qui signifie que le corps filtrant doit être régénéré fréquemment. L'exploitation industrielle de ce corps filtrant est donc difficilement envisageable.

Il existe donc un besoin pour un corps filtrant présentant une perte de charge réduite, à tout moment de sa durée de vie, et nécessitant ainsi un nettoyage moins fréquent. L'invention vise à satisfaire ce besoin.

Plus particulièrement, l'invention concerne un bloc filtrant pour la filtration des particules contenues dans les gaz d'échappement d'un moteur à combustion interne, comprenant des ensembles imbriqués de canaux d'entrée et de canaux de sortie adjacents, lesdits canaux d'entrée et de sortie étant en communication de fluide par leurs parois latérales, lesdites parois latérales présentant, en coupe transversale, une ondulation déterminée de manière à accroître le volume global des canaux d'entrée aux dépens de celui des canaux de sortie, et le volume global des canaux d'entrée étant supérieur à celui des canaux de sortie, remarquable en ce que
- le diamètre hydraulique desdits canaux de sortie est compris entre 0,9 et 1,4 mm, de préférence supérieur à 0,95 mm,
- le rapport r du volume global des canaux d'entrée sur le volume global des canaux de sortie est compris entre 1,15 et 4, de préférence supérieur à 1,35 et/ou inférieur à 3,
- la surface de filtration est comprise entre 0,825 m² et 1,4 m² par litre dudit bloc filtrant, de préférence supérieure à 0,92 m²,
- le taux d'asymétrie de ladite ondulation est inférieur à 20%.

Comme on le verra plus en détail dans la suite de la description, cette particularité permet de diminuer sensiblement la perte de charge induite par le bloc filtrant, et donc de diminuer la fréquence de la régénération du corps filtrant auquel il appartient.

Selon d'autres caractéristiques préférées de l'invention,
- lesdits canaux de sortie ont une section transversale de surface constante sur toute la longueur dudit bloc filtrant ;
- lesdits canaux d'entrée et de sortie sont rectilignes et parallèles ;
- lesdits canaux d'entrée et de sortie sont agencés les uns par rapport aux autres de manière que l'intégralité du gaz filtré par un canal d'entrée quelconque passe dans des canaux de sortie adjacents audit canal d'entrée ;
- ladite ondulation présente, en coupe transversale, une forme sinusoïdale;le taux d'asymétrie de ladite ondulation est inférieur à 15%, de préférence inférieur à 12%, et/ou supérieur à 5%, de préférence supérieur à 6%;
- ladite ondulation est périodique et une demi-période de ladite ondulation s'étend sur la largeur d'un desdits canaux.
- lesdits canaux d'entrée et de sortie sont disposés en alternance suivant un rang horizontal ou vertical quelconque dudit bloc, formant ainsi sur la face avant ou arrière du bloc une structure en damier.

L'invention concerne également un corps filtrant destiné à un filtre à particules, remarquable en ce qu'il comporte au moins un bloc filtrant conforme à l'invention.

La description qui va suivre, faite en se référant au dessin annexé, ainsi que les exemples permettront de mieux comprendre et apprécier les avantages de l'invention. Dans ce dessin :
- la figure 1a est une vue partielle de la face avant (c'est-à-dire celle sur laquelle les gaz d'échappement arrivent) d'un bloc filtrant de l'art antérieur, alors que la figure 1b est une vue en coupe de ce bloc selon le trait de coupe AA de la figure 1a et que la figure 1c est une vue en coupe transversale d'une filière d'extrusion conçue pour fabriquer ce bloc filtrant,
- les figures 2a à 2c sont des vues analogues à celles des figures 1a à 1c, respectivement, et illustrent un premier mode de réalisation d'un corps filtrant suivant l'invention,
- la figure 3 est une vue partielle de la face avant d'un bloc filtrant selon l'invention, selon un deuxième mode de réalisation de l'invention,
- la figure 4 est un graphe représentant la perte de charge en fonction du temps d'utilisation, pour différents corps filtrants neufs, dits « propres », testés.
- la figure 5 est un graphe représentant la perte de charge en fonction du temps d'utilisation, pour différents corps filtrants testés dans lesquels les résidus de combustion occupent un volume correspondant à 50% du volume des canaux d'entrée du filtre de référence, ce qui correspond à une distance parcourue par le véhicule d'environ 80 000 km. De tels corps filtrants sont dits "encrassés". Les résidus sont généralement dans le fond du canal d'entrée.

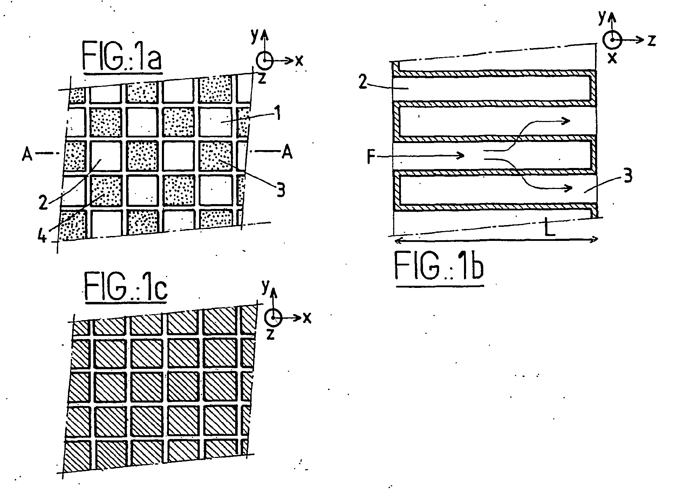

Toutes les figures 1 à 3 correspondent à des vues partielles de blocs filtrants. Il peut en fait s'agir de la vue partielle d'un corps filtrant monolithique ou bien de la vue partielle d'un corps filtrant formé par assemblage de blocs filtrants.

Sur ces figures, l'épaisseur des parois séparant les différents canaux n'est pas à l'échelle et ne constitue pas une limite à l'invention.

La figure 1a schématise la face avant d'un bloc filtrant utilisé actuellement pour retenir les particules contenues dans les gaz d'échappement de véhicules automobiles propulsés par un moteur diesel. Ce bloc filtrant comporte des canaux tous identiques dont la section transversale est carrée et de dimension constante dans toute la longueur du corps filtrant. Sur cette face avant, un canal sur deux est bouché. Les canaux 1 et 2 sont ouverts et constituent donc des canaux dits d'entrée. Les canaux 3 et 4 sont bouchés et constituent donc des canaux dits de sortie. La figure 1 b est une vue de coupe longitudinale selon le trait AA de la figure 1 a. Le flux F des gaz d'échappement entre dans le bloc filtrant par les canaux d'entrée et traverse ensuite les parois latérales des canaux pour rejoindre les canaux de sortie. La figure 1c est une vue de coupe transversale de la filière d'extrusion utilisée pour fabriquer les blocs filtrants utilisés actuellement et représentés selon la figure 1 a. Sur cette vue, les traits pleins représentent les parties évidées par usinage et dans lesquelles la pâte céramique pourra passer.

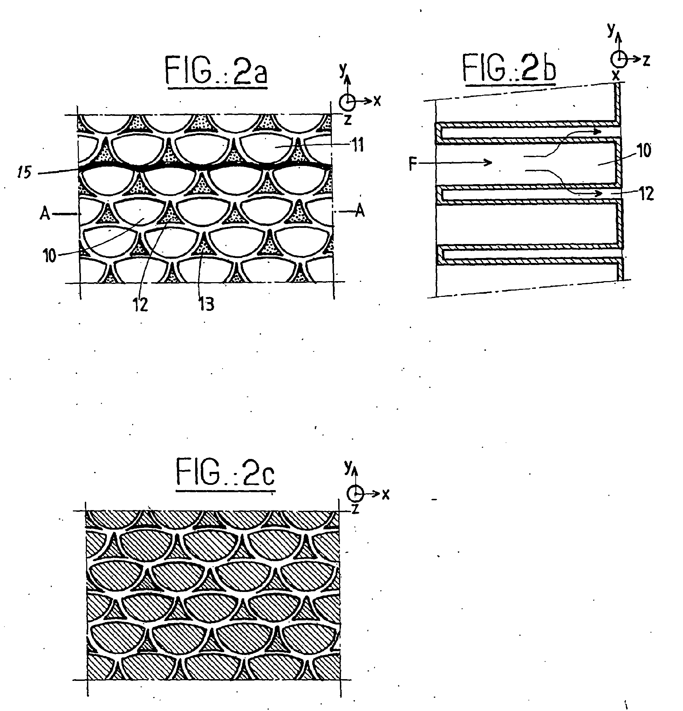

La figure 2a schématise la face avant d'un premier mode de réalisation d'un bloc filtrant selon l'invention. Les canaux 10 et 11 sont ouverts et constituent les canaux d'entrée. Les canaux 12 et 13 sont bouchés et constituent les canaux de sortie. Les canaux sont organisés selon un réseau de canaux de section transversale triangulaire déformée pour accroître le volume global des canaux d'entrée aux dépens de celui des canaux de sortie. C'est ainsi qu'une paroi intermédiaire, non plane, entre un canal d'entrée et un canal de sortie peut être concave du côté du canal d'entrée, comme représenté à la figure 2a, et convexe du côté du canal de sortie.

La figure 2b est une vue en coupe selon le trait AA de la figure 2a. Le flux F des gaz d'échappement entre dans le corps filtrant par les canaux d'entrée et traverse ensuite les parois des canaux pour rejoindre les canaux de sortie. Du fait de l'accroissement du volume global des canaux d'entrée mentionné plus haut, la surface disponible sur les parois des canaux d'entrée ou "surface de filtration" se trouve augmentée (au détriment de celle des canaux de sortie) par rapport à un corps filtrant de l'art antérieur tel que celui de la figure 1.

Toute la surface des canaux d'entrée sert avantageusement à la filtration des gaz d'échappement. En effet, il n'existe pas de zone(s) d'un ou plusieurs canal(aux) d'entrée qui débouche(nt) dans un autre canal d'entrée, zone(s) qui ne peu(ven)t être utile(s) à la filtration puisque les gaz d'échappement peuvent la (les) traverser dans les deux sens.

De préférence, les canaux d'entrée et de sortie sont parallèles et rectilignes. Avantageusement, il est ainsi possible de fabriquer le bloc filtrant selon l'invention par extrusion.

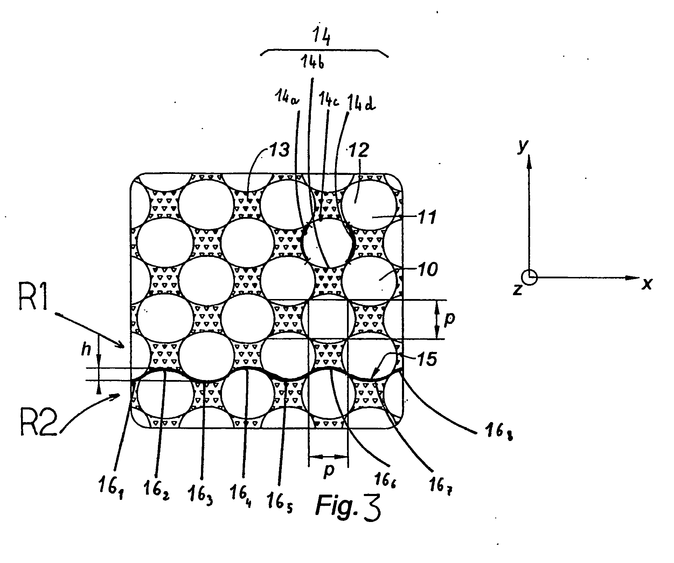

La figure 2c est une vue de coupe transversale de la filière d'extrusion utilisée pour réaliser le bloc filtrant de la figure 3a ; vue sur laquelle les traits pleins représentent les parties évidées par usinage et dans lesquelles la pâte céramique pourra passer. Cette filière permet de fabriquer des canaux de sections transversales constantes sur toute la longueur du bloc filtrant, ce qui facilite leur extrusion.

Les canaux sont rectilignes suivant la longueur du corps filtrant. Ainsi, en coupe longitudinale (voir figure 2b), les canaux ont une section droite et constante sur toute leur longueur L. La fabrication des blocs filtrants en est facilitée.

Les canaux d'entrée ont une section transversale supérieure à celle des canaux de sortie afin d'augmenter le volume disponible pour le stockage des suies. Les canaux d'entrée et de sortie sont agencés les uns par rapport aux autres de manière que l'intégralité du gaz filtré par un canal d'entrée quelconque passe dans des canaux de sortie adjacents à ce canal d'entrée, ce qui optimise le surface de filtration disponible pour un volume de bloc filtrant déterminé.

La figure 3 schématise la face avant d'un autre mode de réalisation d'un bloc filtrant selon l'invention. Les canaux 10 et 11 sont ouverts et constituent les canaux d'entrée. Les canaux 12 et 13 sont bouchés et constituent les canaux de sortie. Les canaux sont organisés selon un réseau de canaux de section transversale carrée déformée pour accroître le volume global des canaux d'entrée aux dépens de celui des canaux de sortie. Selon un rang horizontal (x) ou vertical (y) quelconque, les canaux d'entrée et de sortie sont disposés en alternance, formant une structure en damier. La paroi latérale 14 d'un canal d'entrée 11 est donc formée de quatre portions de paroi latérale 14a-14d séparant le volume intérieur de ce canal des quatre volumes intérieurs des quatre canaux de sortie adjacents, respectivement.

De préférence, une paroi intermédiaire 15, non plane, séparant deux rangs horizontaux R₁ et R₂, et/ou deux rangs verticaux, de canaux (et donc formée par un ensemble de portions de parois latérales, référencées 16₁ à 16₈, de ces canaux) est concave du côté des canaux d'entrée et convexe du côté des canaux de sortie.

En suivant un rang horizontal (selon l'axe x) ou vertical (selon l'axe y) de canaux, la paroi intermédiaire 15, présente de préférence, en coupe transversale, une forme ondulée ou « en vague » (« wavy » en anglais), la paroi 15 ondulant sensiblement d'une demi longueur d'ondulation sur la largeur d'un canal.

On appelle "longueur" d'une ondulation, la distance séparant deux points de cette ondulation localisée à une même hauteur, avec le même sens de variation de pente. Dans le cas d'une ondulation périodique, la "longueur" de l'ondulation est appelée "période".

De préférence l'ondulation est périodique, mais l'amplitude des ondulations peut être constante ou variable. De préférence cette amplitude est constante. De préférence encore, l'ondulation présente une forme sinusoïdale dont la demi-période est égale au pas "p" du réseau de canaux, comme représenté sur la figure 3.

De préférence enfin, toutes les parois intermédiaires 15 d'un bloc, s'étendant verticalement ou horizontalement, présentent, en coupe transversale, une ondulation de forme identique.

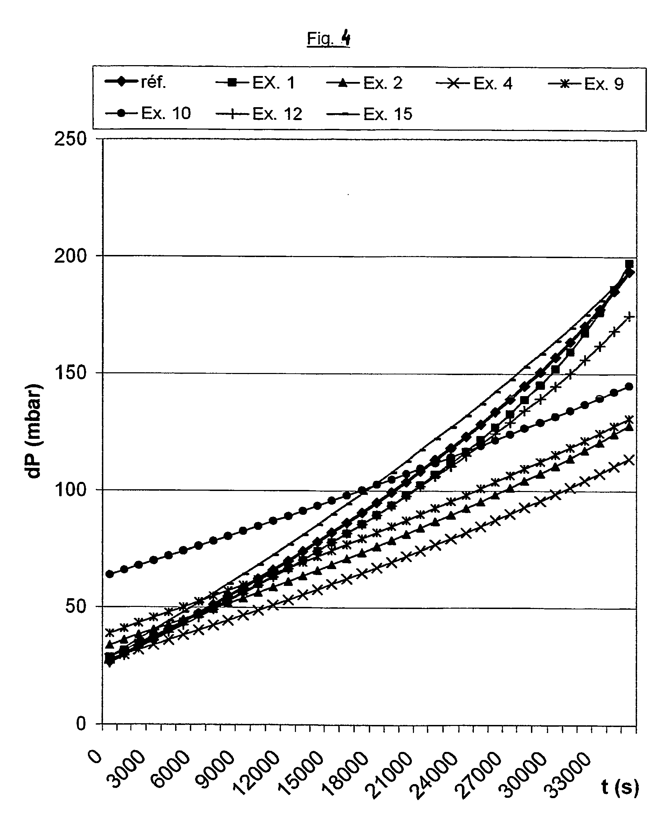

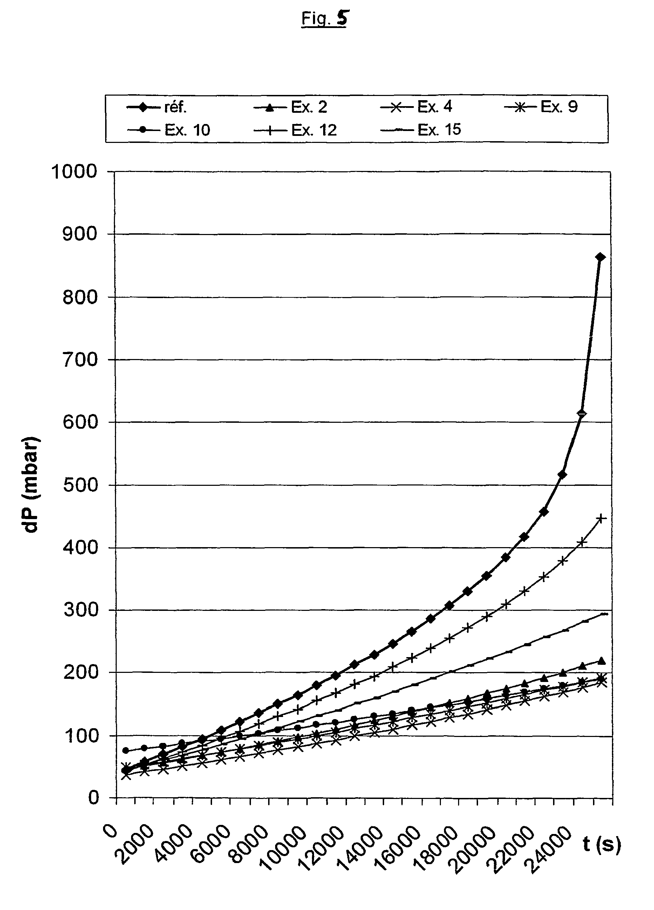

Le « taux d'asymétrie » désigne le rapport entre l'amplitude « h » et la demi longueur de ladite ondulation (ou entre l'amplitude "h" et la demi-période dans le cas d'une ondulation périodique). Les exemples suivants, résumés dans le tableau 1, sont fournis à titre illustratif et non limitatif. Les figures 4 et 5 représentent les courbes d'augmentation de la perte de charge en fonction du temps correspondant à certains exemples du tableau 1, avec des filtres propres et encrassés, respectivement.

Les corps filtrants testés étaient constitués par l'assemblage de 16 blocs filtrants solidarisés par un joint d'épaisseur 1 mm. Ces corps filtrants étaient cylindriques avec un diamètre de 144 mm et une longueur de 9 pouces (soit 228,6 mm). Les canaux étaient du type de ceux représentés sur la figure 4, les parois ayant un profil sensiblement sinusoïdal, et les canaux de sortie et d'entrée ayant une section transversale de surface constante sur toute la longueur L du corps filtrant.

Pour les besoins des calculs, les gaz d'échappement ont été introduits dans les canaux d'entrée des corps filtrants testés à une température de 250°C et avec un débit de 320 m³/heure. La concentration en particules dans ces gaz d'échappement était de 2,2 10⁻⁵ kg/m³.

Pour les tests des corps filtrants encrassés, la concentration en résidus de combustion dans les canaux d'entrée était de 1,8 10⁻⁹ m³/m³ de gaz d'échappement.

L'exemple de référence « Ref » correspond à un filtre constitué par l'assemblage de 16 blocs filtrants solidarisés par un joint d'épaisseur 1 mm. Ce filtre était cylindrique avec un diamètre de 144 mm et une longueur de 9 pouces (soit 228,6 mm). Les canaux étaient du type de ceux représentés sur la figure 1, les canaux de sortie et d'entrée ayant une section transversale carrée de surface constante sur toute la longueur L du corps filtrant. Le pas du réseau était de 1,8 mm et l'épaisseur des parois de 350 µm.

Les calculs des surfaces de filtration, des volumes de canaux et des pertes de charge ont été réalisés par l'Institut de Mécaniques des Fluides de Toulouse (France).

Par « diamètre hydraulique » d'une section transversale ou d'un canal, on entend le rapport entre quatre fois la section du canal et le périmètre du canal.

La densité de canaux est mesurée en nombre de canaux par pouce carré (cpsi, c'est-à-dire, en anglais, « cells per square inch »).

Ve désigne le volume total des canaux d'entrée, Vs le volume total des canaux de sortie. On définit le rapport r de la manière suivante : r = Ve/Vs.

Par « surface de filtration », on entend la surface des parois des canaux d'entrée susceptible d'être traversée par le flux gazeux à filtrer. La surface de filtration est évaluée en mètres carrés par litre de bloc filtrant.

Les performances d'un corps filtrant sont évaluées par la mesure de la durée « t » en minutes pour atteindre une perte de charge « dP » déterminée, et par la perte de charge initiale (dP pour t = 0). La mesure de la durée « t » en minutes pour atteindre une perte de charge « dP » de x mbar est notée t_{/x}.

On considère qu'il est avantageux qu'un corps filtrant respecte les critères suivants :
- Perte de charge initiale inférieure à 50 mbar ;
- t_{/100} ≥ 300 pour un filtre propre ;
- t_{/150} ≥ 500 pour un filtre propre ;
- t_{/150} ≥ 200 pour un filtre encrassé.

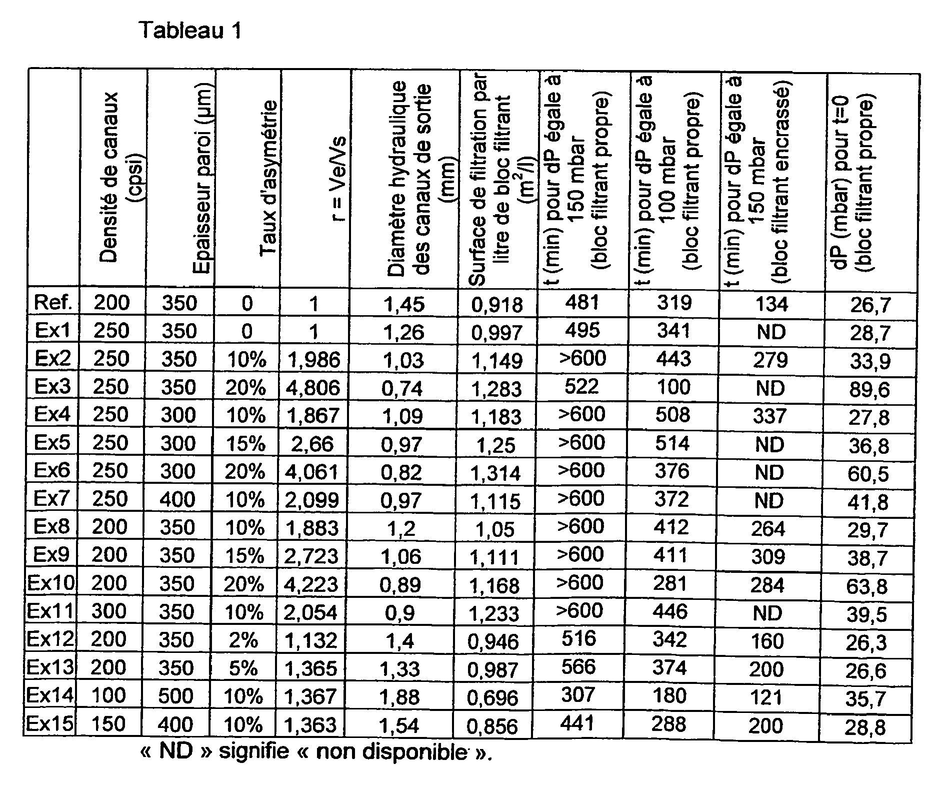

### Le tableau 1 et les figures 5 et 6 permettent de faire les constats suivants :

Pour les corps filtrants neufs, plus la surface de filtration est grande, plus l'augmentation, dans le temps, de la perte de charge est lente. Autrement dit, la pente de chargement est d'autant plus faible que la surface de filtration est grande. La surface de filtration n'est cependant pas le seul critère comme le montre une comparaison de l'exemple 15 et de l'exemple de référence. Cette comparaison fait apparaître que, selon l'invention, un rapport r supérieur permet avantageusement de compenser une surface de filtration inférieure lorsque les filtres sont encrassés.

Sans être lié par aucune théorie, la Demanderesse explique ce phénomène de la manière suivante.

Un rapport r élevé signifie un plus grand volume dans les canaux d'entrée pour stocker les résidus de combustion. Pour une surface de filtration et un volume de résidus de combustion (c'est-à-dire un nombre de régénérations) donnés, la proportion de la surface de filtration inefficace du fait d'un recouvrement par les résidus de combustion est donc plus faible. Il en résulte une perte de charge induite plus faible. Entre deux régénérations, la perte de charge induite par le corps filtrant augmente donc plus lentement.

En outre, le plus grand volume dans les canaux d'entrée permet de stocker une plus grande quantité de résidus de combustion. Le nombre de régénérations avant démontage/remontage du filtre peut donc être augmenté.

A épaisseur de paroi constante, une augmentation du taux d'asymétrie implique une augmentation de capacité de stockage des canaux d'entrée et une augmentation de la surface de filtration du bloc.

Le taux d'asymétrie ne doit cependant pas être augmenté excessivement sous peine d'entraîner une réduction de la section des canaux de sortie telle qu'il en résulte une augmentation préjudiciable de la perte de charge.

Un compromis doit donc être déterminé. De préférence, le taux d'asymétrie est inférieur à 20%, de préférence à 15%, de préférence inférieur à 12%, et supérieur à 5%, de préférence supérieur à 6%.

Selon l'invention, la durée entre deux opérations de démontage/nettoyage du corps filtrant est donc augmentée non seulement du fait d'un encrassement résiduel de la surface de filtration par les résidus de combustion plus faible après chaque régénération, ce qui permet un encrassement par les suies plus lent entre deux régénérations, mais aussi du fait qu'un plus grand nombre de régénérations est possible, le volume de stockage des résidus de combustion étant plus grand.

L'automobiliste pourra donc parcourir un plus grand nombre de kilomètres sans faire de maintenance sur le filtre.

Selon l'invention, on considère qu'il est optimal d'avoir
- un rapport r supérieur ou égal à 1,15, de préférence supérieur à 1,35, et inférieur à 4 et, de préférence inférieur à 3,
- une surface de filtration au moins égale à 0,825 m² par litre de bloc filtrant, de préférence supérieure ou égale à 0,92 m² par litre de bloc filtrant.

Les canaux de sortie et d'entrée ayant une section transversale de surface constante sur toute la longueur du bloc filtrant, l'augmentation du rapport r résulte d'une augmentation du diamètre hydraulique des canaux d'entrée et/ou d'une diminution du diamètre hydraulique des canaux de sortie. On constate sur le tableau 1 (voir notamment les exemples 3, 6 et 10) que lorsque le diamètre hydraulique des canaux de sortie est très faible, la perte de charge induite par le corps filtrant propre est beaucoup trop élevée. Ceci peut être rédhibitoire puisque l'homologation en puissance des moteurs tient compte de la ligne d'échappement.

Selon l'invention, le diamètre hydraulique des canaux de sortie doit être supérieur ou égal à 0,9 mm et, de préférence, compris entre 0,95 et 1,4 mm.

Bien entendu, la présente invention n'est pas limitée aux modes de réalisation décrits et représentés ci-dessus, fournis à titre illustratif et non limitatif.

Ainsi l'invention concerne également un corps filtrant monolithique. Le bloc filtrant pourrait avoir une forme quelconque, un arrangement de canaux quelconque.

Enfin, la section transversale des canaux n'est pas limitée aux formes décrites.

## Revendications

1. Bloc filtrant pour la filtration des particules contenues dans les gaz d'échappement d'un moteur à combustion interne, comprenant des ensembles imbriqués de canaux d'entrée (10, 11) et de canaux de sortie (12, 13) adjacents et en communication de fluide par leurs parois latérales, ledit bloc comportant un ensemble de portions de parois latérales (16₁-16₈) formant une paroi intermédiaire (15) entre des canaux d'entrée (10, 11) et de sortie (12, 13) et présentant, en coupe transversale, une ondulation déterminée de manière à accroître le volume global desdits canaux d'entrée (10, 11) aux dépens de celui des canaux de sortie (12, 13), et le volume global (Ve) desdits canaux d'entrée (10, 11) étant supérieur à celui (Vs) desdits canaux de sortie (12, 13), **caractérisé en ce que**
• le diamètre hydraulique desdits canaux de sortie (12, 13) est compris entre 0,9 et 1,4 mm,
• le rapport r du volume global (Ve) des canaux d'entrée (10, 11) sur le volume global (Vs) des canaux de sortie (12, 13) est compris entre 1,15 et 4,
• la surface de filtration est comprise entre 0,825 m² et 1,4 m² par litre dudit bloc filtrant,
• le taux d'asymétrie de ladite ondulation est inférieur à 20%.

2. Bloc filtrant selon la revendication 1, **caractérisé en ce que** le diamètre hydraulique desdits canaux de sortie (12, 13) est supérieur à 0,95 mm.

3. Bloc filtrant selon l'une des revendications 1 et 2, **caractérisé en ce que** ledit rapport r supérieur à 1,35.

4. Bloc filtrant selon l'une quelconque des revendications précédentes, **caractérisé en ce que** ledit rapport r est inférieur à 3.

5. Bloc filtrant selon l'une quelconque des revendications précédentes, **caractérisé en ce que** la surface de filtration est supérieure à 0,92 m² par litre dudit bloc filtrant.

6. Bloc filtrant selon l'une quelconque des revendications précédentes, **caractérisé en ce que** lesdits canaux de sortie (12, 13) ont une section transversale de surface constante sur toute la longueur (L) dudit bloc filtrant.

7. Bloc filtrant selon l'une quelconque des revendications précédentes, **caractérisé en ce que** lesdits canaux d'entrée (10, 11) et de sortie (12, 13) sont rectilignes et parallèles.

8. Bloc filtrant selon l'une quelconque des revendications précédentes, **caractérisé en ce que** lesdits canaux d'entrée (10, 11) et de sortie (12, 13) sont agencés les uns par rapport aux autres de manière que l'intégralité du gaz filtré par un canal d'entrée quelconque (10, 11) passe dans des canaux de sortie (12, 13) adjacents audit canal d'entrée (10, 11).

9. Bloc filtrant selon l'une quelconque des revendications précédentes, **caractérisé en ce que** le taux d'asymétrie de ladite ondulation est inférieur à 15%.

10. Bloc filtrant selon l'une quelconque des revendications précédentes, **caractérisé en ce que** le taux d'asymétrie de ladite ondulation est inférieur à 12%.

11. Bloc filtrant selon l'une quelconque des revendications précédentes, **caractérisé en ce que** le taux d'asymétrie de ladite ondulation est supérieur à 5%.

12. Bloc filtrant selon l'une quelconque des revendications précédentes, **caractérisé en ce** ladite ondulation est périodique et une demi-période de ladite ondulation s'étend sur la largeur d'un desdits canaux (10, 11, 12, 13).

13. Bloc filtrant selon l'une quelconque des revendications précédentes, **caractérisé en ce que** ladite ondulation présente, en coupe transversale, une forme sinusoïdale.

14. Corps filtrant destiné à un filtre à particules, **caractérisé en ce qu'**il comporte au moins bloc conforme à l'une quelconque des revendications précédentes.

## Claims

1. Filtration unit for filtration of particles contained in the exhaust gas of an internal combustion engine, comprising interlaced sets of adjacent input channels (10, 11) and output channels (12, 13) which are in fluid communication through their side walls, said unit comprising a set of portions of side walls (16₁-16₈) that forms an intermediate wall (15) between the input (10, 11) and output channels (12, 13) and in cross-section has an undulation determined so as to increase the global volume of said input channels (10,11) at the expense of that of the output channels (12, 13), the global volume (Ve) of said input channels (10, 11) being greater than that (Vs) of said output channels (12, 13), **characterised in that**
- the hydraulic diameter of said output channels (12, 13) is between 0.9 and 1.4 mm,
- the ratio r of the global volume (Ve) of the input channels (10, 11) over the global volume (Vs) of the output channels (12, 13) is between 1.15 and 4,
- the filtration surface area is between 0.825 m² and 1.4 m² per litre of said filtration unit,
- the asymmetry rate of said undulation is less than 20%.

2. Filtration unit according to claim 1, **characterised in that** the hydraulic diameter of said output channels (12, 13) is greater than 0.95 mm.

3. Filtration unit according to one of claims 1 and 2, **characterised in that** said ratio r is greater than 1.35.

4. Filtration unit according to any of the preceding claims, **characterised in that** said ratio r is less than 3.

5. Filtration unit according to any of the preceding claims, **characterised in that** the filtration surface area is greater than 0.92 m² per litre of said filtration unit.

6. Filtration unit according to any of the preceding claims, **characterised in that** said output channels (12, 13) have a cross-section of constant area over the entire length (L) of said filtration unit.

7. Filtration unit according to any of the preceding claims, **characterised in that** said input channels (10, 11) and output channels (12, 13) are rectilinear and parallel.

8. Filtration unit according to any of the preceding claims, **characterised in that** said input channels (10, 11) and output channels (12, 13) are arranged in relation to each other such that the integrality of the gas filtered through any input channel (10, 11) passes into output channels (12, 13) adjacent to said input channel (10, 11).

9. Filtration unit according to any of the preceding claims, **characterised in that** the asymmetry rate of said undulation is less than 15%.

10. Filtration unit according to any of the preceding claims, **characterised in that** the asymmetry rate of said undulation is less than 12%.

11. Filtration unit according to any of the preceding claims, **characterised in that** the asymmetry rate of said undulation is greater than 5%.

12. Filtration unit according to any of the preceding claims, **characterised in that** the said undulation is periodic and a half period of said undulation extends over the width of one of said channels (10, 11, 12, 13).

13. Filtration unit according to any of the preceding claims, **characterised in that** the said undulation in cross-section has a sinusoidal form.

14. Filtration body intended for a particle filter, **characterised in that** it comprises at least one unit in accordance with any of the preceding claims.

## Patentansprüche

1. Filterblock für die Filterung der in den Abgasen eines Verbrennungsmotors enthaltenen Partikel, umfassend verschachtelte Anordnungen aus benachbarten Einlasskanälen (10, 11) und Auslasskanälen (12, 13), die über ihre Seitenwände in Fluidverbindung sind, wobei der genannte Block eine Anordnung aus Abschnitten von Seitenwänden (16₁-16₈) umfasst, die eine Zwischenwand (15) zwischen Einlasskanälen (10, 11) und Auslasskanälen (12, 13) bilden und die im Querschnitt eine bestimmte Welligkeit aufweisen, so dass das Gesamtvolumen der Einlasskanäle (10,11) auf Kosten des Gesamtvolumens der Auslasskanäle (12, 13) vergrößert wird, und wobei das Gesamtvolumen (Ve) der Einlasskanäle (10, 11) größer ist als das Gesamtvolumen (Vs) der Auslasskanäle (12, 13), **dadurch gekennzeichnet, dass**
- der hydraulische Durchmesser der Auslasskanäle (12, 13) zwischen 0,9 und 1,4 mm liegt,
- das Verhältnis r des Gesamtvolumens (Ve) der Einlasskanäle (10,11) zu dem Gesamtvolumen (Vs) der Auslasskanäle (12, 13) zwischen 1,15 und 4 liegt,
- die Filtrationsfläche zwischen 0,825 m² und 1,4 m² pro Liter des Filterblocks liegt,
- der Grad der Asymmetrie der Welligkeit unter 20 % liegt.

2. Filterblock nach Anspruch 1, **dadurch gekennzeichnet, dass** der hydraulische Durchmesser der Auslasskanäle (12, 13) größer als 0,95 mm ist.

3. Filterblock nach einem der Ansprüche 1 und 2, **dadurch gekennzeichnet, dass** das Verhältnis r größer als 1,35 ist.

4. Filterblock nach irgendeinem der vorhergehenden Ansprüche, **dadurch gekennzeichnet, dass** das Verhältnis r kleiner als 3 ist.

5. Filterblock nach irgendeinem der vorhergehenden Ansprüche, **dadurch gekennzeichnet, dass** die Filtrationsfläche größer als 0,92 m² pro Liter des Filterblocks ist.

6. Filterblock nach irgendeinem der vorhergehenden Ansprüche, **dadurch gekennzeichnet, dass** die Auslasskanäle (12, 13) einen Querschnitt konstanter Fläche über die gesamte Länge (L) des Filterblocks haben.

7. Filterblock nach irgendeinem der vorhergehenden Ansprüche, **dadurch gekennzeichnet, dass** die Einlasskanäle (10, 11) und die Auslasskanäle (12, 13) geradlinig und parallel sind.

8. Filterblock nach irgendeinem der vorhergehenden Ansprüche, **dadurch gekennzeichnet, dass** die Einlasskanäle (10, 11) und die Auslasskanäle (12, 13) derart zueinander angeordnet sind, dass das gesamte über einen beliebigen Einlasskanal (10, 11) gefilterte Gas in dem genannten Einlasskanal (10, 11) benachbarte Auslasskanäle (12, 13) gelangt.

9. Filterblock nach irgendeinem der vorhergehenden Ansprüche, **dadurch gekennzeichnet, dass** der Grad der Asymmetrie der Welligkeit unter 15 % liegt.

10. Filterblock nach irgendeinem der vorhergehenden Ansprüche, **dadurch gekennzeichnet, dass** der Grad der Asymmetrie der Welligkeit unter 12 % liegt.

11. Filterblock nach irgendeinem der vorhergehenden Ansprüche, **dadurch gekennzeichnet, dass** der Grad der Asymmetrie der Welligkeit über 5 % liegt.

12. Filterblock nach irgendeinem der vorhergehenden Ansprüche, **dadurch gekennzeichnet, dass** die Welligkeit periodisch ist und dass sich eine Halbperiode der Welligkeit über die Breite von einem der Kanäle (10, 11, 12, 13) erstreckt.

13. Filterblock nach irgendeinem der vorhergehenden Ansprüche, **dadurch gekennzeichnet, dass** die Welligkeit im Querschnitt eine Sinusform aufweist.

14. Filterkörper, der für einen Partikelfilter bestimmt ist, **dadurch gekennzeichnet, dass** er wenigstens einen Block nach irgendeinem der vorhergehenden Ansprüche umfasst.
